# EUROPÄISCHE PATENTSCHRIFT

(11) **EP 3 133 272 B1**
(45) Veröffentlichungstag und Bekanntmachung des Hinweises auf die Patenterteilung: **17.10.2018**
(21) Anmeldenummer: 16183161.5
(22) Anmeldetag: 08.08.2016
(51) Int. Cl.: F02D 19/02, F02D 41/04, F02D 41/06, F02M 21/02

(54) **VERFAHREN ZUM BETREIBEN EINER VORRICHTUNG ZUR KRAFTSTOFFVERSORGUNG, VORRICHTUNG ZUR KRAFTSTOFFVERSORGUNG UND COMPUTERPROGRAMMPRODUKT**
METHOD FOR OPERATING A DEVICE FOR CONTROLLING THE SUPPLY OF FUEL, DEVICE FOR SUPPLYING FUEL AND COMPUTER PROGRAM PRODUCT
PROCEDE DE FONCTIONNEMENT D'UN DISPOSITIF D'ALIMENTATION EN CARBURANT, DISPOSITIF D'ALIMENTATION EN CARBURANT ET PRODUIT-PROGRAMME INFORMATIQUE

(30) Priorität: 13.08.2015 DE 102015215490
(43) Veröffentlichungstag der Anmeldung: 22.02.2017
(73) Patentinhaber: Continental Automotive GmbH, 30165 Hannover (DE)
(72) Erfinder: Heinrich, Andreas, 93059 Regensburg (DE)

(56) Entgegenhaltungen:
- EP-A2- 0 661 428
- DE-A1-102007 015 783
- DE-T5-112012 005 442
- JP-A- 2000 303 909
- JP-A- 2004 100 583
- US-A1- 2009 070 008

## Beschreibung

Die Erfindung betrifft eine Vorrichtung zur Kraftstoffversorgung für ein mit verdichtetem Gas betriebenes Fahrzeug sowie ein Verfahren zum Betreiben einer Vorrichtung zur Kraftstoffversorgung und ein Computerprogrammprodukt.

Unter einem verdichteten Gas wird hier und im Folgenden ein gasförmiger Kraftstoff verstanden, der im Fahrzeug in einem Druckbehälter vorgehalten wird. Beispielsweise werden darunter Erdgas oder Wasserstoff verstanden.

Aus der DE 10 2007 036 958 A1 ist eine Kraftstoffzufuhreinrichtung für ein mit Erdgas betriebenes Fahrzeug bekannt. Bei dieser Einrichtung ist eine Druckminderungseinrichtung vorgesehen, um den Tankdruck von beispielsweise 200 bar auf den niedrigeren Systemdruck der Einblasvorrichtung zu reduzieren.

Aus der JP 2000 303909 A und der US 2009/070008 A1 sind weitere Kraftstoffzufuhreinrichtungen für mit Erdgas betriebene Fahrzeuge bekannt.

Bei derartigen Fahrzeugen tritt nach einem Tankvorgang das Problem auf, dass im Tank ein unbekanntes Gasgemisch mit unbekannten Eigenschaften vorliegt, da die Qualität von Erdgas bzw. verdichteten Gasen allgemein aufgrund ihrer Zusammensetzung stark schwankt. Beispielsweise kann die natürliche Zusammensetzung schwanken und/oder es können Additive beigefügt sein. Wie sich gezeigt hat, so kann beispielsweise der Energieinhalt von Erdgas um bis zu 50% schwanken. Da die Kraftstoffzuführung im Fahrzeug jeweils auf die aktuelle Tankfüllung kalibriert ist, kann es nach einem Betankungsvorgang vorkommen, dass ein Fahrzeug mit den bestehenden Einstellungen nicht mehr startbar ist. Zur Lösung dieses Problems kann ein Sensor eingesetzt werden, der das jeweilige Gas auf seine Bestandteile analysiert und den Energieinhalt daraus ableitet. Dies ist jedoch aufwendig.

Eine andere Möglichkeit ist es, das Fahrzeug für den Startvorgang nach einer Betankung mit Benzin zu betreiben und erst nach erfolgter Adaption auf Erdgas umzuschalten. Dies setzt jedoch das Vorhandensein eines Benzintanks voraus und ist zumeist mit einem höheren Verbrauch verbunden, da die Motoren von mit komprimiertem Gas betriebenen Fahrzeugen meist auf einen Gasbetrieb optimiert sind.

Es ist daher eine Aufgabe der vorliegenden Erfindung, ein Verfahren zum Betreiben einer Vorrichtung zur Kraftstoffversorgung anzugeben, mit der ein mit verdichtetem Gas betriebenes Fahrzeug sicher und effizient auch nach einem Betankungsvorgang gestartet werden kann. Ferner soll eine Vorrichtung zur Durchführung dieses Verfahrens angegeben werden.

Diese Aufgabe wird mit dem Gegenstand der unabhängigen Ansprüche gelöst. Vorteilhafte Weiterbildungen ergeben sich aus den abhängigen Ansprüchen.

Gemäß einer Ausführungsform der Erfindung wird ein Verfahren zum Betreiben einer Vorrichtung zur Kraftstoffversorgung für ein mit verdichtetem Gas betriebenes Fahrzeug angegeben, wobei die Vorrichtung zur Kraftstoffversorgung zumindest einen Kraftstofftank und eine Versorgungsleitung umfasst, über die einem Verbrennungsmotor des Fahrzeugs Kraftstoff aus dem Kraftstofftank zuleitbar ist. Das Verfahren umfasst dabei das Feststellen eines Abstellens des Fahrzeugs, das Schließen zumindest eines stromabwärts des Kraftstofftanks in die Versorgungsleitung geschalteten ersten Ventils und danach das Schließen zumindest eines zwischen dem Kraftstofftank und dem ersten Ventil angeordneten zweiten Ventils, wobei zwischen dem ersten Ventil und dem zweiten Ventil Kraftstoff eingeschlossen wird.

Unter einem Abstellen des Fahrzeugs wird hier und im Folgenden das Abschalten des Motors des Fahrzeugs verstanden. Entsprechend wird unter dem Starten eines Fahrzeugs das Anlassen des Motors verstanden.

Das Verfahren hat zur Folge, dass zwischen dem ersten Ventil und dem zweiten Ventil Kraftstoff mit bekannten Eigenschaften, insbesondere mit bekanntem Energieinhalt, eingeschlossen wird. Dieser Kraftstoff wird unter Tankdruck in demjenigen Bereich der Versorgungsleitung vorgehalten, der durch das erste Ventil und das zweite Ventil begrenzt ist. Er steht für einen anschließenden Startvorgang zur Verfügung. Dadurch kann der Motor mit einem Kraftstoff bekannten Energieinhalts gezündet werden. Ein Fahrzeug mit einer derart betriebenen Vorrichtung zur Kraftstoffversorgung ist somit auch nach einem Betankungsvorgang unmittelbar startfähig.

Gemäß einer Ausführungsform des Verfahrens umfasst das Verfahren ferner das Feststellen eines Startens des Fahrzeugs, das Öffnen des ersten Ventils, so dass dem Verbrennungsmotor der zwischen dem ersten Ventil und dem zweiten Ventil eingeschlossene Kraftstoff zugeführt wird, und danach das Öffnen des zweiten Ventils.

Dabei kann ein Zeitraum Δt oder eine Druckdifferenz Δp zwischen dem Öffnen des ersten Ventils und dem Öffnen des zweiten Ventils derart gewählt werden, dass die Vermischung des "alten" mit dem "neuen" Gas möglichst allmählich erfolgt. Dazu kann zunächst auch ein nur teilweises Öffnen des zweiten Ventils erfolgen.

Das hat den Vorteil, dass der Startvorgang mit dem bereits bekannten Kraftstoff durchgeführt werden kann und ein abrupter Übergang zum neuen Gasgemisch vermieden wird.

Gemäß einer Ausführungsform der Erfindung erfolgt das Öffnen des zumindest einen zweiten Ventils erst nach einem erfolgreichen Starten des Fahrzeugs, d.h. nach einer Zündung des Motors. Dadurch ist sichergestellt, dass im Falle einer misslungenen Zündung nicht vorzeitig "neues" Gas aus den Tanks in die Versorgungsleitung strömt, was eine Zündung des Motors weiter erschweren könnte. Stattdessen können zunächst weitere Zündungsversuche mit dem in der Versorgungsleitung zwischen dem ersten Ventil und dem zweiten Ventil zwischengespeicherten "alten" Gasgemisch vorgenommen werden.

Typischerweise wird die Zwischenspeicherung von Gas in der Versorgungsleitung durch Schließen zunächst des ersten Ventils und anschließend des zweiten Ventils bei jedem Abstellen des Fahrzeugs durchgeführt. Die Versorgung des Motors zunächst mit zwischengespeichertem Kraftstoff dadurch, dass bei einem Starten des Fahrzeugs zunächst das erste Ventil und erst anschließend das zweite Ventil geöffnet werden, kann auch an das Feststellen eines erfolgten Betankungsvorgangs gebunden werden. Dazu kann beispielsweise ein entsprechender Druckanstieg im Tank als Indikator für einen Betankungsvorgang herangezogen werden.

Gemäß einer Ausführungsform der Erfindung umfasst das Verfahren ferner das Feststellen eines Betankungsvorgangs und nach dem Öffnen des zumindest einen zweiten Ventils die Adaptierung eines Gasqualitätsfaktors basierend auf Daten einer Lambdasonde des Fahrzeugs.

Diese Ausführungsform ermöglicht es, den Energieinhalt des neuen Gemischs nach einem Betankungsvorgang zu ermitteln. Dazu wird zumindest ein Gasqualitätsfaktor definiert, der insbesondere dessen Energieinhalt kennzeichnet und auf dem basierend die Einspritzung von Kraftstoff in den Motor erfolgt. Dieser Gasqualitätsfaktor wird gemäß der beschriebenen Ausführungsform auf Daten der Lambdasonde des Fahrzeugs basierend adaptiert, d.h. an die Eigenschaften des neuen Gasgemisches angepasst. Ein technisch aufwendiger Sensor zur Analyse der Bestandteile des Kraftstoffs ist somit nicht notwendig, es wird allein die ohnehin im Fahrzeug vorhandene Lambdasonde verwendet.

Als zweites Ventil kann insbesondere ein Absperrventil am Kraftstofftank verwendet werden. Besteht der Kraftstofftank aus mehreren, voneinander getrennten Teilen, d.h., sind mehrere Kraftstofftanks vorhanden, weisen diese oft eigene Absperrventile auf. In diesem Fall kann entweder jedes der Absperrventile als zweites Ventil angesteuert werden, oder es wird ein weiteres Ventil stromabwärts angeordnet, das als zweites Ventil dient. Die Anordnung des zweiten Ventils unmittelbar am Kraftstofftank hat den Vorteil, dass ein möglichst großer Bereich der Versorgungsleitung für die Zwischenspeicherung von Kraftstoff zur Verfügung steht.

Ein weiterer Aspekt der Erfindung betrifft ein Computerprogrammprodukt aufweisend ein computerlesbares Medium und auf dem computerlesbaren Medium abgespeicherten Programmcode der, wenn er auf einer Recheneinheit des Fahrzeugs ausgeführt wird, die Recheneinheit anleitet, ein Verfahren gemäß einer der genannten Ausführungsformen auszuführen.

Die Recheneinheit ist dabei insbesondere als Motorsteuergerät ausgebildet.

Gemäß einem weiteren Aspekt der Erfindung wird eine Vorrichtung zur Kraftstoffversorgung für ein mit verdichtetem Gas betriebenes Fahrzeug zur Durchführung des beschriebenen Verfahrens angegeben, wobei das zumindest eine erste Ventil und das zweite Ventil derart angeordnet sind, dass zwischen ihnen ein Hochdruckbereich der Versorgungsleitung eingeschlossen ist.

Diese Ausführungsform hat den Vorteil, dass der Kraftstoff in einem Bereich der Versorgungsleitung eingeschlossen wird, der mit besonders hoher Sicherheit dicht ist und dessen Dichtigkeit überwacht wird. Der unbemerkte Austritt von Gas ist somit mit hoher Wahrscheinlichkeit ausgeschlossen.

In einer Ausführungsform ist das erste Ventil unmittelbar stromaufwärts des den Hochdruckbereich von einem Niederdruckbereich der Versorgungsleitung trennenden Druckreglers angeordnet. Das hat insbesondere den Vorteil, dass ein möglichst großer Teil des Hochdruckbereichs der Versorgungsleitung für die Zwischenspeicherung von Kraftstoff ausgenutzt werden kann.

Das erste Ventil kann in dieser Ausführungsform als separates Bauteil unmittelbar vor dem Druckregler angeordnet sein. Es kann jedoch auch in den Druckregler integriert sein.

Gemäß einer Ausführungsform sind die Versorgungsleitung und die Anordnung des zumindest einen ersten Ventils und des zumindest einen zweiten Ventils derart ausgelegt, dass die zwischen dem zumindest einen ersten Ventil und dem zumindest einen zweiten Ventil eingeschlossene Kraftstoffmenge für mehrere Startvorgänge des Fahrzeugs ausreichend ist.

Dadurch ist sichergestellt, dass auch nach einem erfolglosen Zündungsversuch noch Kraftstoff bereits bekannter Qualität zur Verfügung steht, um zumindest einen weiteren Zündungsversuch durchführen zu können. Dabei kann insbesondere auch ein Puffer einberechnet sein, um die zwischengespeicherte Kraftstoffmenge nicht zu knapp auszulegen.

Gemäß einem Aspekt der Erfindung wird ein Fahrzeug mit der beschriebenen Vorrichtung zur Kraftstoffversorgung angegeben.

Ausführungsformen der Erfindung werden nun anhand der beigefügten Figuren näher erläutert.
- Figur 1: zeigt schematisch ein Flussdiagramm eines Verfahrens zum Betreiben einer Vorrichtung zur Kraftstoffversorgung für ein mit verdichtetem Gas betriebenes Fahrzeug gemäß einer Ausführungsform der Erfindung und
- Figur 2: zeigt schematisch eine Vorrichtung zur Kraftstoffversorgung zur Durchführung dieses Verfahrens.

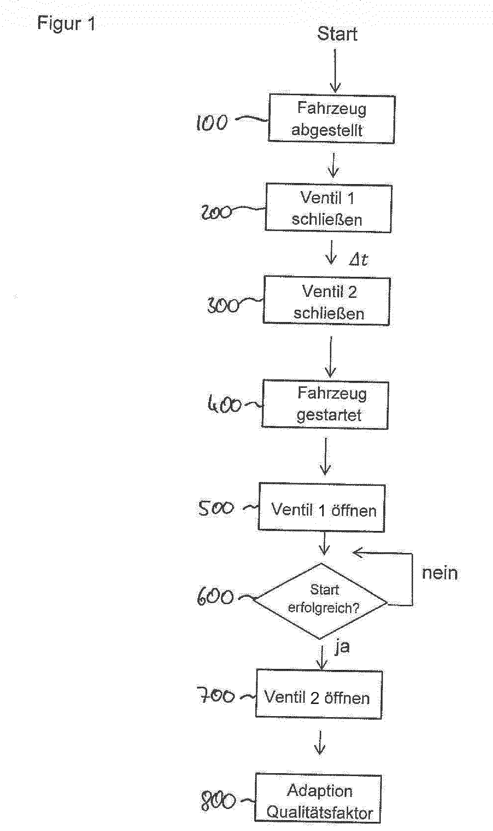

Gemäß dem Verfahren zum Betreiben einer Vorrichtung zur Kraftstoffversorgung, das in dem Ablaufdiagramm in Figur 1 dargestellt ist, wird in einem Schritt 100 festgestellt, dass das Fahrzeug abgestellt wird, dass also eine Abschaltung des Motors durchgeführt wird. Daraufhin wird in einem Schritt 200 das Ventil 1, das stromabwärts des Kraftstofftanks in die Versorgungsleitung geschaltet ist, geschlossen. Nach Ablauf einer Zeitspanne Δt wird auch das Ventil 2, das zwischen dem Kraftstofftank und dem ersten Ventil angeordnet ist, in einem Schritt 300 geschlossen. Somit ist eine gewisse Kraftstoffmenge zwischen dem ersten Ventil und dem zweiten Ventil unter Tankdruck in der Versorgungsleitung eingeschlossen.

In einem Schritt 400 wird festgestellt, dass das Fahrzeug gestartet wird, dass also ein Einschalten des Motors vorgenommen wird. Daraufhin wird das Ventil 1 geöffnet, damit Kraftstoff aus der Versorgungsleitung zum Motor strömen kann. Da das Ventil 2 bei diesem Schritt 500 noch geschlossen ist, wird der Kraftstoff zum Starten des Motors alleine aus der in der Versorgungsleitung zwischengespeicherten Kraftstoffmenge entnommen, nicht jedoch aus dem Kraftstofftank.

In einem Schritt 600 wird abgefragt, ob der Start erfolgreich war, ob also eine Zündung des Motors erfolgte. Da der Energieinhalt des zur Zündung verwendeten Kraftstoffs bekannt war, wird der Start, wenn keine anderen Probleme vorliegen, mit großer Wahrscheinlichkeit erfolgreich sein. Ist er das nicht, so wird der Zündungsversuch wiederholt. Dazu wird ebenfalls in der Kraftstoffleitung zwischengespeicherter Kraftstoff verwendet.

Erst wenn die Abfrage ergibt, dass der Start erfolgreich war und der Motor demnach gezündet ist, wird in einem Schritt 700 das Ventil 2 geöffnet, so dass weiterer Kraftstoff aus dem Kraftstofftanks nachströmen kann. Falls jedoch für einen weiteren Startversuch kein zwischengespeicherter Kraftstoff mehr verfügbar ist, kann vorgesehen sein, dass das zweite Ventil vor einem erfolgreichen Starten des Fahrzeugs geöffnet wird.

In einem Schritt 800 erfolgt dann die Adaption des Gasqualitätsfaktors. Diese wird insbesondere basierend auf Daten einer Lambdasonde des Fahrzeugs durchgeführt. Nach erfolgreicher Adaption ist der Energieinhalt des neuen Gasgemisches im Tank bekannt. Für weitere Startvorgänge kann dann dieser neue, nun bekannte Kraftstoff in der Versorgungsleitung zwischengespeichert werden.

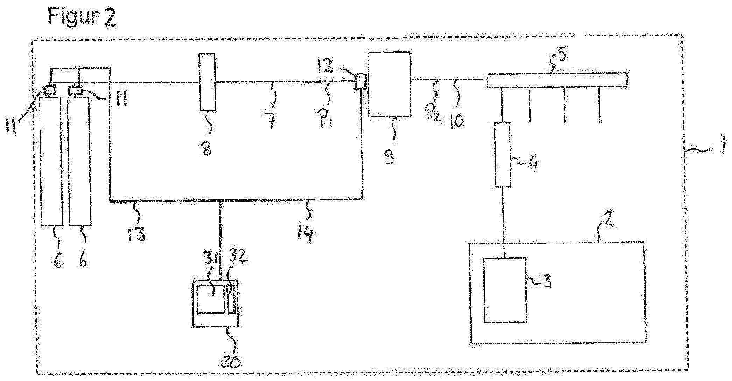

Figur 2 zeigt ein lediglich gestrichelt angedeutetes Fahrzeug 1, das insbesondere als Personenkraftwagen, Lastkraftwagen oder Bus ausgebildet ist. Das Fahrzeug 1 wird mit verdichtetem Erdgas (englisch: "compressed natural gas", CNG) als Kraftstoff betrieben.

Alternativ könnte als Kraftstoff auch beispielsweise Wasserstoff verwendet werden.

Das Fahrzeug 1 weist einen Verbrennungsmotor 2 mit einer Anzahl von Zylindern 3 auf, in denen das Erdgas verbrannt wird. In der gezeigten Ausführungsform weist der Verbrennungsmotor 2 vier Zylinder 3 auf, von denen jedoch nur einer dargestellt ist.

Der Kraftstoff gelangt über eine Kraftstoffeinblasvorrichtung 4 in die nicht näher gezeigte Brennkammer des Zylinders 3. Der Kraftstoffeinblasvorrichtung 4 vorgeschaltet ist eine Kraftstoffverteilerleiste 5, die aus der Zuleitung 10 zugeführten Kraftstoff in die einzelnen Kraftstoffeinblasvorrichtungen 4 und die ihnen zugeordneten Zylinder 3 verteilt.

Die Kraftstoffeinblasvorrichtung 4 arbeitet typischerweise mit einem Kraftstoffdruck von etwa 5 - 20 bar. Dieser Druck p2 herrscht auch in der Zuleitung 1. Demgegenüber wird das verdichtete Erdgas in als Druckbehälter ausgebildeten Tanks 6 unter einem Druck p1 von etwa 200 bar vorgehalten. Dieser Druck p1 herrscht auch in der Zuleitung 7, die von dem Tanks 6 über einen Filter 8 zum Druckregler 9 führt. Der Druckregler 9 reduziert den Druck p1 auf den Druck p2.

Der Bereich der Versorgungsleitung 7 zwischen den Kraftstofftanks 6 und dem Druckregler 9 wird auch als Hochdruckbereich der Versorgungsleitung 7 bezeichnet. In der gezeigten Ausführungsform wird der Hochdruckbereich genutzt, um nach einem Abstellen des Fahrzeugs Kraftstoff zwischenzuspeichern, der für den nächsten Startvorgang zur Verfügung stehen soll.

Dazu ist am Ausgang jedes Kraftstofftanks 6 ein zweites Ventil 11 in die Versorgungsleitung 7 geschaltet. In der gezeigten Ausführungsform sind zwei Kraftstofftanks 6 vorgesehen. Am Ausgang jedes dieser beiden Tanks 6 ist ein zweites Ventil 11 angeordnet, das die Kraftstoffzufuhr aus dem jeweiligen Tank 6 in die Versorgungsleitung 7 absperren kann.

Unmittelbar vor dem Druckregler 9 ist ein erstes Ventil 12 in die Versorgungsleitung 7 geschaltet, das die Kraftstoffleitung zum Druckregler 9 unterbinden kann. Die Ventile 11 und 12 können beispielsweise elektromagnetisch oder mechanisch ausgebildet sein.

Die Ventile 11 und 12 werden durch eine Recheneinheit 30 des Fahrzeugs 1 angesteuert. Sie sind dazu über Signalleitungen 13 und 14 mit der Recheneinheit 30 verbunden.

Die Recheneinheit 30 weist eine Verarbeitungseinheit 31 und ein computerlesbares Medium 32 auf. Die Verarbeitungseinheit 31 kann beispielsweise als elektronischer Prozessor ausgebildet sein, insbesondere als Mikroprozessor oder Mikrokontroller. Das computerlesbare Medium 32 kann beispielsweise als EEPROM, Flash-Speicher bzw. Flash-EEPROM oder NVRAM ausgebildet sein. Auf dem computerlesbaren Medium 32 ist ein Programmcode abgespeichert, der, wenn er auf der Recheneinheit 30 ausgeführt wird, die Recheneinheit 30 anleitet, die oben genannten Ausführungsformen des Verfahrens auszuführen.

Stellt die Recheneinheit 30 fest, dass das Fahrzeug 1 abgestellt wird, so veranlasst sie über die Signalleitung 14 das Schließen des Ventils 12. Dadurch kann noch Kraftstoff aus den Tanks 6 in die Versorgungsleitung 7 strömen, jedoch nicht mehr zum Druckregler 9 und zum Verbrennungsmotor 2. Nach einer Zeitspanne *Δ*t veranlasst die Recheneinheit 30 über die Signalleitung 13 das Schließen der zweiten Ventile 11.

Stellt die Recheneinheit 30 später fest, dass das Fahrzeug 1 wieder gestartet wird, so öffnet sie zunächst nur das erste Ventil 12, so dass Kraftstoff aus dem Hochdruckbereich der Versorgungsleitung 7 zum Verbrennungsmotor 2 strömen kann. Erst wenn die Recheneinheit 30 die erfolgte Zündung des Verbrennungsmotors 2 feststellt, veranlasst sie über die Signalleitung 13 auch das Öffnen der zweiten Ventile 11, so dass Kraftstoff aus den Tanks 6 nachströmen kann.

Die Zündung des Verbrennungsmotors 2 erfolgt somit möglichst ausschließlich durch in der Versorgungsleitung 6 zwischengespeicherten Kraftstoff, nicht jedoch mit Kraftstoff, der den Kraftstofftanks 6 nach dem Starten des Fahrzeugs 1 entnommen wird. Es ist somit möglich, nach einem Betankungsvorgang des Fahrzeugs 1 das Starten mit Kraftstoff durchzuführen, dessen Energieinhalt bereits bekannt ist.

### Bezugszeichenliste

- 1: Fahrzeug
- 2: Verbrennungsmotor
- 3: Zylinder
- 4: Kraftstoffeinblasvorrichtung
- 5: Kraftstoffverteilerleiste
- 6: Tank
- 7: Versorgungsleitung
- 8: Filter
- 9: Druckregler
- 10: Zuleitung
- 11: zweites Ventil
- 12: erstes Ventil
- 13: Signalleitung
- 14: Signalleitung
- 30: Recheneinheit
- 31: Verarbeitungseinheit
- 32: computerlesbares Medium
- 100: Schritt
- 200: Schritt
- 300: Schritt
- 400: Schritt
- 500: Schritt
- 600: Schritt
- 700: Schritt
- 800: Schritt

## Patentansprüche

1. Verfahren zum Betreiben einer Vorrichtung zur Kraftstoffversorgung für ein mit verdichtetem Gas betriebenes Fahrzeug (1), wobei die Vorrichtung zur Kraftstoffversorgung zumindest einen Kraftstofftank (6) und eine Versorgungsleitung (7) umfasst, über die einem Verbrennungsmotor (2) des Fahrzeugs (1) Kraftstoff aus dem Kraftstofftank (6) zuleitbar ist, wobei das Verfahren folgendes umfasst:
- Feststellen eines Abstellens des Fahrzeugs (1);
- Schließen zumindest eines stromabwärts des Kraftstofftanks (6) in die Versorgungsleitung (7) geschalteten ersten Ventils (12);
- danach Schließen zumindest eines zwischen dem Kraftstofftank (6) und dem ersten Ventil (12) in der Versorgungsleitung (7) angeordneten zweiten Ventils (11), wobei zwischen dem ersten Ventil (12) und dem zweiten Ventil (11) Kraftstoff eingeschlossen wird, wobei das Verfahren ferner folgendes umfasst:
- Feststellen eines Startens des Fahrzeugs (1);
- Öffnen des ersten Ventils (12), so dass dem Verbrennungsmotor (2) der zwischen dem ersten Ventil (12) und dem zweiten Ventil (11) eingeschlossene Kraftstoff zugeführt wird;
- danach Öffnen des zumindest einen zweiten Ventils (11) .

2. Verfahren nach Anspruch 1,
wobei das Öffnen des zumindest einen zweiten Ventils (11) erst nach einem erfolgreichen Starten des Fahrzeugs (1) erfolgt.

3. Verfahren nach Anspruch 1 oder 2,
wobei das Verfahren ferner folgendes umfasst:
- Feststellen eines Betankungsvorganges;
- nach dem Öffnen des zumindest einen zweiten Ventils (11) Adaptierung eines Gasqualitätsfaktors basierend auf Daten einer Lambda-Sonde des Fahrzeugs (1).

4. Verfahren nach einem der Ansprüche 1 bis 3,
wobei als zweites Ventil (11) ein Absperrventil am Kraftstofftank (6) verwendet wird.

5. Computerprogrammprodukt aufweisend ein computerlesbares Medium (32) und auf dem computerlesbaren Medium (32) abgespeicherten Programmcode, der, wenn er auf einer Recheneinheit (30) ausgeführt wird, die Recheneinheit (30) anleitet, ein Verfahren nach einem der Ansprüche 1 bis 4 auszuführen.

6. Vorrichtung zur Kraftstoffversorgung für ein mit verdichtetem Gas betriebenes Fahrzeug (1) zur Durchführung des Verfahrens nach einem der Ansprüche 1 bis 4,
wobei das zumindest eine erste Ventil (12) und das zweite Ventil (11) derart angeordnet sind, dass zwischen ihnen ein Hochdruckbereich der Versorgungsleitung (7) eingeschlossen ist.

7. Vorrichtung nach Anspruch 6,
wobei das erste Ventil (12) unmittelbar stromaufwärts eines den Hochdruckbereich von einem Niederdruckbereich der Versorgungsleitung (7) trennenden Druckreglers (9) angeordnet ist.

8. Vorrichtung Anspruch 6 oder 7,
wobei die Versorgungsleitung (7) und die Anordnung des zumindest einen ersten Ventils (12) und des zumindest einen zweiten Ventils (11) derart ausgelegt sind, dass die zwischen dem zumindest einen ersten Ventil (12) und dem zumindest einen zweiten Ventil (11) eingeschlossene Kraftstoffmenge für mehrere Startvorgänge des Fahrzeugs (1) ausreichend ist.

9. Fahrzeug (1) mit einer Vorrichtung zur Kraftstoffversorgung nach einem der Ansprüche 6 bis 8.

## Claims

1. Method for operating a device for supplying fuel for a vehicle (1) which is operated with compressed gas, wherein the device for supplying fuel comprises at least one fuel tank (6) and one supply line (7) via which fuel can be fed from the fuel tank (6) to a combustion engine (2) of the vehicle (1), wherein the method comprises the following:
- detecting shutting down of the vehicle (1);
- closing at least one first valve (12) which is connected into the supply line (7) downstream of the fuel tank (6);
- then closing at least one second valve (11) which is arranged in the supply line (7), between the fuel tank (6) and the first valve (12), wherein fuel is enclosed between the first valve (12) and the second valve (11), wherein the method also comprises the following:
- detecting starting of the vehicle (1);
- opening the first valve (12), with the result that the fuel which is enclosed between the first valve (12) and the second valve (11) is fed to the combustion engine (2);
- then opening the at least one second valve (11).

2. Method according to Claim 1,
wherein the at least one second valve (11) is not opened until after the vehicle (1) has started successfully.

3. Method according to Claim 1 or 2,
wherein the method also comprises the following:
- detecting a refuelling process;
- adapting a gas quality factor on the basis of data of a lambda probe of the vehicle (1) after the opening of the at least one second valve (11).

4. Method according to one of Claims 1 to 3, wherein a shut-off valve on the fuel tank (6) is used as a second valve (11).

5. Computer program product having a computer-readable medium (32) and program code which is stored on the computer-readable medium (32) and which, when executed on a computing unit (30), induces the computing unit (30) to carry out a method according to one of Claims 1 to 4.

6. Device for supplying fuel for a vehicle (1) which is operated with compressed gas, for carrying out the method according to one of Claims 1 to 4,
wherein the at least one first valve (12) and the second valve (11) are arranged in such a way that a high-pressure region of the supply line (7) is enclosed between them.

7. Device according to Claim 6,
wherein the first valve (12) is arranged directly upstream of a pressure regulator (9) which disconnects the high-pressure region from a low-pressure region of the supply line (7).

8. Device according to Claim 6 or 7,
wherein the supply line (7) and the arrangement of the at least one first valve (12) and of the at least one second valve (11) are configured in such a way that the quantity of fuel which is enclosed between the at least one first valve (12) and the at least one second valve (11) is sufficient for a plurality of starting processes of the vehicle (1).

9. Vehicle (1) having a device for supplying fuel according to one of Claims 6 to 8.

## Revendications

1. Procédé de fonctionnement d'un dispositif d'alimentation en carburant pour un véhicule (1) fonctionnant au gaz comprimé, dans lequel l'appareil destiné à l'alimentation en carburant comprend au moins un réservoir de carburant (6) et une conduite d'alimentation (7), au moyen de laquelle du carburant provenant du réservoir de carburant (6) peut être envoyé vers un moteur à combustion (2) du véhicule (1), dans lequel le procédé comprend ce qui suit :
- détermination d'un arrêt du véhicule (1) ;
- fermeture d'au moins une première valve (12) commutée vers la conduite d'alimentation (7) en aval du réservoir de carburant (6) ;
- suivie de la fermeture d'au moins une deuxième valve (11) agencée dans la conduite d'alimentation (7) entre le réservoir de carburant (6) et la première valve (12), dans lequel du carburant est piégé entre la première valve (12) et la deuxième valve (11), dans lequel le procédé comprend en outre ce qui suit :
- détermination d'un démarrage du véhicule (1) ;
- ouverture de la première valve (12), de sorte que le carburant piégé entre la première valve (12) et la deuxième valve (11) est envoyé vers le moteur à combustion (2) ;
- suivie de l'ouverture de l'au moins une deuxième valve (11) ;

2. Procédé selon la revendication 1, dans lequel l'ouverture de l'au moins une deuxième valve (11) se produit en premier après un démarrage réussi du véhicule (1).

3. Procédé selon la revendication 1 ou 2, dans lequel le procédé comprend en outre ce qui suit :
- détermination d'une opération de remplissage ;
- après l'ouverture de l'au moins une deuxième valve (11), application d'un facteur de qualité du gaz basé sur des données d'une sonde lambda du véhicule (1).

4. Procédé selon l'une des revendications 1 à 3, dans lequel une vanne d'arrêt sur le réservoir de carburant (6) est utilisée comme deuxième valve (11).

5. Produit-programme informatique comportant un support lisible par ordinateur (32) et du code de programme enregistré sur le support lisible par ordinateur (32), ce code de programme conduisant une unité de calcul (30) à exécuter un procédé selon l'une des revendications 1 à 4 lorsqu'il est exécuté sur cette unité de calcul (30).

6. Dispositif d'alimentation en carburant pour un véhicule (1) fonctionnant au gaz comprimé destiné à exécuter un procédé selon l'une des revendications 1 à 4, dans lequel l'au moins une première valve (12) et l'au moins une deuxième valve (11) sont agencées de telle sorte qu'une zone de haute pression de la conduite d'alimentation (7) est piégée entre celles-ci.

7. Dispositif selon la revendication 6, dans lequel la première valve (12) est agencée directement en amont d'un régulateur de pression (9) séparant la zone de haute pression d'une zone de basse pression de la conduite d'alimentation (7).

8. Dispositif selon la revendication 6 ou 7, dans lequel la conduite d'alimentation (7) et l'arrangement de l'au moins une première valve (12) et de l'au moins une deuxième valve (11) sont disposés de telle sorte que la quantité de carburant piégée entre l'au moins une première valve (12) et l'au moins une deuxième valve (11) est suffisante pour plusieurs opérations de démarrage du véhicule (1).

9. Véhicule (1) doté d'un dispositif d'alimentation en carburant selon l'une des revendications 6 à 8.
